# FASCICULE DE BREVET EUROPEEN

(11) **EP 1 058 623 B1**
(45) Date de publication et mention de la délivrance du brevet: **16.04.2008**
(21) Numéro de dépôt: 99908921.2
(22) Date de dépôt: 17.02.1999
(51) Int. Cl.: B60C 19/08, B29C 47/32, B29C 47/56, B60C 11/18

(54) **PNEUMATIQUE CONDUCTEUR D'ELECTRICITE ET APPAREILLAGE D'EXTRUSION D'UN PROFILE AVEC INSERT CONDUCTEUR**
ELEKTRISCH LEITENDER REIFEN UND VORRICHTUNG ZUM EXTRUDIEREN EINES PROFILES MIT LEITFÄHIGEM EINSATZ
ELECTRICALLY CONDUCTIVE TYRE AND APPARATUS FOR EXTRUDING A SECTION WITH CONDUCTIVE INSERT

(30) Priorité: 26.02.1998 FR 9802460
(43) Date de publication de la demande: 13.12.2000
(73) Titulaire: Compagnie Générale des Etablissements MICHELIN-MICHELIN & CIE, 63040 Clermont-Ferrand Cedex 09 (FR)
(72) Inventeur: CALVAR, Didier, F-63110 Beaumont (FR); NICOLAS, Serge, F-63100 Clermont-Ferrand (FR); BARDY, Daniel, F-63100 Clermont-Ferrand (FR)
(74) Mandataire: Diernaz, Christian
(86) Numéro de dépôt international: PCT/EP1999/001042
(87) Numéro de publication internationale: WO 1999/043505

(56) Documents cités:
- EP-A- 0 104 133
- EP-A- 0 609 550
- EP-A- 0 658 452
- EP-A- 0 718 127
- EP-A- 0 753 391
- US-A- 5 017 118

## Description

La présente invention a pour objet un pneumatique possédant plusieurs mélanges comprenant à titre de charge majoritaire une charge non renforçante telle que la silice, ou mélanges faiblement chargés en noir, au moins un de ces mélanges constituant la bande de roulement. Elle concerne plus particulièrement un pneumatique pouvant présenter en roulage des élévations de températures internes non négligeables, tel qu'un pneumatique destiné, par exemple, à porter de lourdes charges. Elle concerne aussi un procédé destiné à l'obtention d'un tel pneumatique, et un appareillage en vue de la mise en oeuvre d'un tel procédé; un tel appareillage, correspondant an préambule de la revendication 10, est par example connu du US-A-5,017,118.

Les problèmes d'environnement étant de plus en plus cruciaux, les économies de carburant et la lutte contre les nuisances créées par les véhicules à moteur étant devenues une priorité, un des objectifs des manufacturiers de pneumatiques est de réaliser un pneumatique possédant à la fois une très faible résistance au roulement, une excellente adhérence tant sur sol sec que sur sol humide ou enneigé ou verglacé, une très bonne résistance à l'usure, et enfin un bruit de roulement réduit.

Pour atteindre cet objectif, il a été proposé dans la demande de brevet européen EP A 501 227, un pneumatique possédant une bande de roulement comportant à titre de charge renforçante principale de la silice. Si cette solution permet d'obtenir le meilleur compromis entre l'ensemble des propriétés très contradictoires mentionnées ci-dessus, il s'est cependant avéré qu'en fonction des véhicules, les pneumatiques mettant en oeuvre une bande de roulement comportant à titre de charge renforçante principale de la silice présentent l'inconvénient d'accumuler à un degré plus ou moins important l'électricité statique qui se forme par friction du pneumatique sur la route lors du roulage du véhicule en raison de l'absence de conductivité électrique de la silice.

L'électricité statique ainsi accumulée dans un pneumatique est susceptible de provoquer, lorsque certaines conditions particulières sont réunies, un désagréable choc électrique à l'occupant d'un véhicule, lorsqu'il est amené à toucher la carrosserie du véhicule. Elle est en outre susceptible de hâter le vieillissement du pneumatique en raison de l'ozone générée par la décharge électrique. Elle peut aussi être à l'origine, en fonction de la nature du sol et du véhicule, d'un mauvais fonctionnement de la radio embarquée dans le véhicule en raison des interférences qu'elle génère.

Ce problème d'accumulation d'électricité statique dans un pneumatique et de la plupart des inconvénients qui y sont liés est fort ancien et s'est déjà posé lorsque la charge renforçante utilisée était du noir de carbone.

La demande EP 0 658 452 A1, correspondant au préambule de la revendication 1, décrit l'adaptation de principes connus de longue date à un pneumatique dit moderne, adaptation qui permet de résoudre les principaux problèmes afférents aux solutions proposées dans différents documents anciens et en particulier les hétérogénéités néfastes introduites dans les architectures de pneumatique. La solution proposée consiste à insérer une bande de mélange caoutchouteux conducteur ou insert s'étendant préférentiellement sur toute la circonférence du pneumatique et reliant la surface de la bande de roulement soit à l'une des nappes de sommet, soit à l'armature de carcasse, soit à tout autre partie du pneumatique suffisamment conductrice de l'électricité, la nécessaire conductivité électrique étant conférée par la présence d'un noir de carbone adapté.

Si une telle solution est parfaitement viable pour un pneumatique comportant une bande de roulement constitué d'un seul et même mélange non conducteur, par exemple une bande de roulement de véhicule de tourisme, il n'en est pas de même dans le cas d'un pneumatique comportant plusieurs couches de mélanges caoutchouteux au-dessus de l'armature de sommet et des couches de caoutchouc entre l'armature de sommet et l'armature de carcasse, comme tel est le cas de tout pneumatique susceptible de rouler avec une température de fonctionnement stabilisée élevée, comme les véhicules lourds, les véhicules rapides.

En effet, si pour des raisons quelconques, on est amené à doter un tel pneumatique d'une couche, ou partie intérieure de la bande de roulement (partie non en contact avec le sol), non conductrice, entre armature de sommet et partie extérieure (partie en contact avec le sol) de la bande de roulement rendue conductrice par la présence d'un insert circonférentiel ou zébrure, ladite partie inférieure devra être rendue conductrice. De même, une couche entre armature de carcasse et armature de sommet, présentant des surépaisseurs notoires dans les régions des bords de nappes de sommet, devra aussi être rendue conductrice, si elle ne l'est pas initialement. Une première solution, pour obtenir une bande de roulement conductrice, consiste à coextruder les parties intérieure et extérieure de la bande de roulement, et à réaliser un insert circonférentiel dans l'ensemble. Ladite solution n'est pas satisfaisante pour plusieurs raisons ; on peut en citer deux : dans le type de pneumatique considéré, l'épaisseur totale de la bande de roulement est trop importante ; par ailleurs, il peut être intéressant que les inserts conducteurs respectivement des couches intérieure et extérieure de la bande de roulement ne soient pas réalisés avec la même qualité de mélange caoutchouteux.

Une autre solution consiste, comme décrit dans le demande française FR 97/02276 (FR-A1-2759946) de la demanderesse, à assurer la connexion électrique entre deux couches conductrices ou rendues conductrices, séparées par une couche non conductrice, par au moins une bande de mélange caoutchouteux de faibles épaisseur, largeur et longueur, posée entre les deux faces de la soudure de la couche non conductrice, et en contact avec les moyens rendant conductrices les deux couches reliées par la connexion. Bien que satisfaisante industriellement, ladite méthode nécessite une pose de produit supplémentaire, et entraîne un coût de fabrication additionnel.

Une troisième solution consiste à doter chaque partie non conductrice d'un insert circonférentiel à tracé rectiligne et circulaire, ou zébrure circulaire, après extrusion de ladite partie par des moyens usuels d'extrusion, et à réunir ensuite les deux produits entre eux avant pose sur l'armature de sommet. Dans la mesure où les zébrures sont généralement très fines afin de ne pas perturber les propriétés physiques des compositions constituant les deux parties de la bande de roulement, l'épaisseur de ces inserts étant, sur le pneumatique vu en section transversale, de l'ordre de 0,01 à 2 mm, une telle solution nécessite que la trace de la zébrure de la partie extérieure de la bande de roulement sur la paroi de contact entre les deux parties soit parfaitement alignée avec ou centrée sur la trace sur ladite paroi de la zébrure de la partie intérieure de la même bande de roulement.

Par ailleurs, les propriétés mécaniques des compositions de caoutchouc avant vulcanisation sont très mauvaises, le mélange de caoutchouc cru pouvant se présenter comme une pâte extrêmement molle ou à l'inverse comme un agglomérat extrêmement dur. Quelle que soit la manière de travailler de tels mélanges, il est difficile de maîtriser parfaitement la géométrie du semi-produit fini qu'est l'ensemble des deux parties non vulcanisées de la bande de roulement : la concordance, l'alignement entre les traces respectives de deux zébrures circulaires sur la surface de contact entre les deux parties présentent de grandes difficultés de mise au point, la solution de deux zébrures circulaires ne pouvant être considérée comme structurellement optimisée et comme industriellement viable, tant du point de vue coût que performances obtenues, la fabrication d'un pneumatique ainsi constitué relevant plus de la mécanique de précision que d'un processus industriel.

Aussi si l'un des buts de l'invention est de dissiper, dans un pneumatique ayant plusieurs mélanges non conducteurs de l'électricité, les charges électrostatiques induites par le roulage du pneumatique, sans significativement affecter le niveau des propriétés du pneumatique, l'autre but est de pouvoir obtenir un pneumatique le plus simplement possible et de moindre coût, que ce soit coût matière et/ou coût de fabrication.

L'invention propose un pneumatique comportant au moins deux couches radialement adjacentes de mélanges caoutchouteux non conducteurs de l'électricité, les dites deux couches ayant une paroi commune de contact, caractérisé en ce que chaque couche contient un insert circonférentiel de mélange conducteur, présentant, sur la paroi de contact une surface circonférentielle, la première de ces couches ayant sur ladite paroi une surface circonférentielle à tracé circulaire de largeur e, la deuxième couche ayant sur ladite paroi une surface circonférentielle avec un tracé de largeur e' allant en le croisant et présentant des crêtes de part et d'autre du tracé circulaire de la première couche, de sorte qu'il y ait circonférentiellement entre les deux tracés plusieurs points de contact assurant la connexion électrique entre les deux éléments conducteurs, le tracé de la deuxième couche ayant une amplitude crête à crête maximale au moins égale à 10 mm.

Le tracé de la surface circonférentielle de la deuxième couche le plus simple à mettre en oeuvre industriellement est un tracé oscillatoire et plus particulièrement un tracé périodique. Un tracé est dit périodique lorsqu'il peut être représentatif d'un fonction périodique, et sera, par exemple, une tracé ondulé, ou un tracé en zigzag ou en triangles, ou un tracé sinusoïdal, ou un tracé en rectangles ou trapèzes. Ledit tracé peut ainsi se définir par une amplitude et une longueur d'onde, par analogie aux mouvements périodiques. L'amplitude a peut être variable le long de la circonférence de la paroi de contact entre couches, mais sera de préférence constante et les axes moyens des deux tracés sur la paroi de contact seront parallèles au et distants du plan équatorial du pneumatique de quantités dont la différence est au plus égale à la demi-amplitude a/2 dudit tracé périodique.

De manière avantageuse car le plus simple, chaque couche contient un insert présentant, vu en section transversale, une aire rectangulaire sur toute l'épaisseur de la couche.

Dans la très grande majorité des cas, les deux couches non conductrices seront les parties intérieure et extérieure de la bande de roulement, et la connexion électrique doit être assurée entre le sol et l'armature de sommet, composée de câbles métalliques calandrés dans un mélange de caoutchouc rendue conducteur par la présence dans sa composition de noir de carbone. Les couches non conductrices peuvent être aussi, d'une part un profilé de forme transversale triangulaire séparant l'armature de carcasse d'un bords d'armature de sommet, et d'autre part les parties intérieure et extérieure de bande de roulement, et la connexion devra être assurée entre les trois couches.

De manière préférentielle, et dans le cas d'une bande de roulement, la partie de ladite bande, munie d'un insert possédant une surface circonférentielle, sur la paroi de contact entre les deux parties, à tracé circulaire sera avantageusement la partie extérieure de la bande de roulement, l'autre partie, préférentiellement la partie intérieure de bande de roulement, étant pourvue d'une zébrure dont la surface circonférentielle a un tracé périodique, de préférence ondulé.

Une couche, que ce soit une partie de bande de roulement ou un profilé intermédiaire entre armature de carcasse et armature de sommet, est généralement obtenue à l'état non vulcanisé au moyen d'une extrusion dans une extrudeuse. Le procédé, destiné à obtenir l'ensemble des deux couches que l'on veut conductrices, par exemple d'une bande de roulement pour pneumatique, consiste à extruder séparément chaque couche, par exemple chaque partie de bande de roulement, à insérer dans chaque couche une zébrure, circonférentielle et rectiligne pour l'une des couches, par exemple pour la partie extérieure de la bande de roulement, périodique pour l'autre couche, par exemple la partie intérieure de ladite bande, et à réunir par les moyens habituels les deux couches, par exemple les deux parties pour former la bande de roulement non vulcanisée. Le procédé, conforme à l'invention, pour obtenir la couche avec une zébrure périodique consiste :
* à extruder, sur un appareil d'extrusion comprenant une tête d'extrusion pourvue d'un canal d'écoulement débouchant sur un orifice d'extrusion, ladite couche,
* à couper le profilé, posé sur un moyen de cheminement disposé en aval de l'orifice d'extrusion, à l'aide d'un moyen coupant,
* à extruder et insérer, entre les deux parois de la coupure et au moyen de la buse d'une micro-extrudeuse amovible, la zébrure de mélange caoutchouteux conducteur à l'état non vulcanisé, ladite buse étant appliquée contre la paroi dudit du moyen de cheminement et animée d'un mouvement périodique parallèle à ladite paroi et d'amplitude au moins égal à 10 mm.

De manière avantageuse, le procédé, conforme à l'invention, utilise une extrudeuse dénommée, de manière connue, extrudeuse à nez à rouleau, le profil ou section du produit extrudé étant défini d'une part par la surface du rouleau sur lequel le mélange caoutchouteux est extrudé et d'autre part par la paroi fixe d'une lame d'extrusion qui coopère avec ladite surface pour délimiter un orifice d'extrusion. Le procédé dérive alors du précédent par le fait que la buse de la micro-extrudeuse est appliquée contre la paroi du rouleau, qui est moyen d'acheminement, et animée d'un mouvement périodique parallèle à ladite paroi.

L'invention concerne aussi l'appareillage destiné à la mise en oeuvre du procédé d'obtention d'une couche, par exemple intérieure de bande de roulement, pourvue d'une zébrure à tracé périodique, comme décrit ci-dessus. Ledit appareillage comprend une extrudeuse normale dite aussi à nez plat ou une extrudeuse avec nez à rouleau pour extruder ladite couche non vulcanisée, et une micro-extrudeuse, montée sur un support permettant de pouvoir assurer le déplacement de ladite micro-extrudeuse dans les trois directions principales, ladite micro-extrudeuse comprenant principalement une tête d'extrusion, munie à son extrémité d'une buse, destinée à extruder, selon les profil et trace désirés, l'insert circonférentiel dans le profilé de mélange non vulcanisé sortant de l'extrudeuse principale, ladite buse ayant son extrémité plaquée contre le rouleau de l'extrudeuse principale ou contre la paroi d'un moyen de cheminement de la partie traitée de bande de roulement. L'invention concerne plus particulièrement la buse ou orifice d'extrusion de la micro-extrudeuse utilisée. Ladite buse est caractérisée en ce qu'elle comprend une surface d'appui et d'attache au nez de la micro-extrudeuse avec les éléments d'attache nécessaires à la fixation, ladite surface étant prolongée axialement à une tête de buse ayant une chambre d'alimentation creuse et présentant en amont une arête vive coupante, et munie en aval d'un orifice d'extrusion de la section souhaitée par lequel est extrudée la matière caoutchouteuse conductrice.

Les caractéristiques de la présente invention seront mieux comprises à l'aide du dessin annexé à la description qui suit, dessin sur lequel,
- la figure 1A représente schématiquement, vu en perspective, la partie sommet d'un pneumatique à bande de roulement non conductrice, alors que la figure 1B est une vue en plan d'une partie de la bande de roulement dudit pneumatique,
- la figure 2 représente les principales composantes de l'appareil utilisé conforme à l'invention,
- la figure 3 est une vue agrandie du système de pose de la zébrure,
- les figures 4A à 4C. sont les différentes vues de la buse d'extrusion de la zébrure, la figure 4A étant une vue de face, la figure 4B une vue de profil et la figure 4C une vue de dessus.

Le pneumatique, de dimension 315/80.R.22.5, conçu pour avoir une basse résistance au roulement, comprend une armature de carcasse (1), composée d'une nappe métallique formée de câbles métalliques inextensibles enrobés dans un mélange de calandrage caoutchouteux, rendu conducteur des charges électrostatiques par l'intermédiaire d'un noir de carbone couramment utilisé comme charge renforçante dans les mélanges. Ladite armature de carcasse (1) est, comme connue, ancrée à au moins une tringle dans chaque bourrelet pour former un retournement (non montrés). A l'intérieur de ladite armature de carcasse (1) se trouvent les couches usuelles de renfort, et les couches dites intérieures constituées de mélanges généralement imperméables aux gaz de gonflage connus. La(les) extrémité(s) de cette(ces) couche(s) intérieure(s) est(sont) généralement recouverte(s) par la partie axialement interne de la couche protectrice du bourrelet (non montrée), couche d'usure dont la partie axialement externe vient prendre appui sur la jante de montage, ladite couche étant généralement très chargée en noir de carbone, donc fortement conductrice.

L'armature de carcasse (1) est surmontée en son sommet d'une armature de sommet (2), composée, dans l'exemple décrit, de deux demi-nappes dites de triangulation (20) formées de câbles métalliques inextensibles orientés par rapport à la direction circonférentielle d'un angle pouvant être compris entre 30° et 90° ; puis radialement au-dessus, de deux nappes (21) et (22) dites de travail composées de câbles métalliques inextensibles croisés d'une nappe à la suivante en faisant avec la direction circonférentielle des angles pouvant être égaux ou inégaux et de valeur absolue comprise entre 10° et 30° ; puis généralement, en dernier lieu d'au moins une nappe (23) dite de protection formée de câbles élastiques faisant avec la direction circonférentielle un angle égal en sens et valeur à l'angle de la nappe de travail radialement la plus à l'extérieur. Tous les câbles de cette armature de sommet (2) sont enrobés dans un ou plusieurs mélange(s) de calandrage caoutchouteux, conducteur(s) des charges électrostatiques grâce à un noir de carbone couramment utilisé comme charge renforçante dans les mélanges.

L'armature de sommet (2), ne possédant pas le même profil transversal que celui de l'armature de carcasse (1) sous-jacente, est séparée de ladite armature de carcasse (1) par un ensemble caoutchouteux de faible épaisseur sur la partie axiale centrale (61), où les deux armatures sont sensiblement parallèles et, de part et d'autre de ladite partie axiale (61), d'épaisseur croissante en allant vers l'extérieur du pneumatique pour former des coins ou profilés triangulaires (62). Pour des raisons d'échauffement, les dits coins (62) de caoutchouc et la partie axiale (61) ne sont pas réalisés avec des mélanges de caoutchouc conducteurs, car très peu chargés en noir de carbone. Radialement au-dessus de l'armature de sommet (2) est disposée la bande de roulement (3) composée de la couche radialement intérieure (31), dite sous-couche, formée de mélange chargé majoritairement par de la silice, sous-couche (31) elle-même surmontée radialement de la couche radialement extérieure (32), ou couche de roulement, très fortement chargée en silice. La bande de roulement (3) est reliée aux bourrelets par les mélanges de flancs (4), eux aussi très fortement chargés en silice.

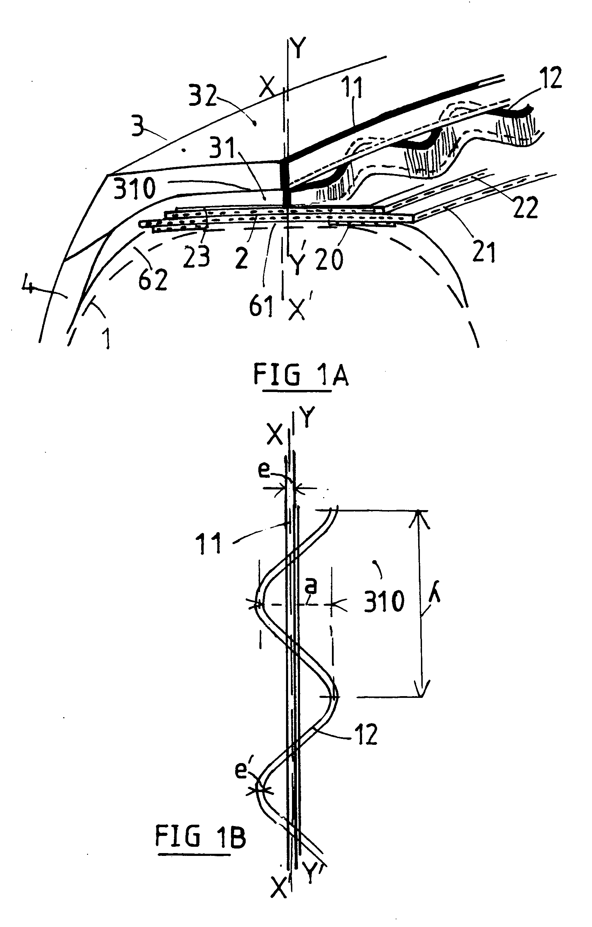

La couche de roulement (32) est rendue conductrice, comme connue en soi, au moyen de l'insert caoutchouteux (11), se présentant sous forme d'un anneau circonférentiel sur toute la hauteur de la couche de roulement (32) pour relier la surface de la bande de roulement venant en contact avec le sol avec la face radialement extérieure de la sous-couche (31). Cet insert (11) de très faible largeur axiale e, est, dans le cas montré, unique et centré théoriquement sur le plan équatorial XX' du pneumatique, et sa trace sur la surface de contact (310) entre les deux parties (31) et (32) de bande de roulement est rectiligne et circulaire. L'insert (11) pourrait être décentré, en particulier dans le cas de la présence sur la bande de roulement d'une rainure centrale ; il pourrait y avoir deux inserts (11), placés par exemple symétriquement par rapport au plan équatorial, ou plus, mais de toute manière placés axialement de sorte que le contact avec le sol puisse être établi quelque soit le taux d'usure de la bande de roulement. Cet ou ces inserts (11) conducteurs de charges électrostatiques, du fait de leur composition caoutchouteuse à haute teneur en noir de carbone, peuvent être réalisés par tous moyens appropriés et ce, tant au moment de la confection du pneumatique à l'état non vulcanisé qu'après vulcanisation. Le ou les inserts conducteurs (11) peuvent être réalisés, par exemple, par extrusion durant la confection de la couche radialement extérieure (32) de la bande de roulement (3) à l'état non vulcanisé. La couche radialement intérieure (31) étant obtenue de manière séparée par extrusion, la connexion électrique entre la couche de roulement (32) ou plus exactement entre l'(les) insert(s) (11) et la nappe radialement extérieure (23) de l'armature de sommet (2), formée de câbles métalliques enrobés dans un mélange de caoutchouc chargé avec un noir de carbone usuel et conducteur, est réalisée par un (des) insert(s) circonférentiel(s) (12) sur toute la hauteur de la partie (31) de bande de roulement, et dont le (les) tracé(s) de largeur e', sur la paroi de contact (310) entre les deux parties (31) et (32) de bande de roulement (3) est (sont) ondulée(s), avec un axe moyen circulaire YY' centré théoriquement sur le plan équatorial. La composition de caoutchouc constituant la connexion conductrice (12) des charges électrostatiques est, comme la composition de l'insert (11), à base d'un caoutchouc naturel et/ou de caoutchoucs synthétiques, habituellement utilisés dans la confection des pneumatiques et particulièrement des bandes de roulement, et ayant comme charge renforçante un noir de carbone conducteur, de préférence usuellement utilisé dans la fabrication des pneumatiques. Comme montré sur la figure 1B, ledit insert (12) a un tracé ou trace , sur la surface de contact (310) entre les deux couches (31) et (32), de forme ondulée avec une amplitude a de l'ondulation égale à 10 mm, très largement supérieure aux largeurs e et e' des traces respectivement des inserts (11) et (12) sur la surface de contact citée, largeurs qui sont comprises entre 0,01 mm et 2 mm, et dans le cas décrit égales à 0,4 mm. La disposition ainsi adoptée permet, après positionnement des deux parties de bande de roulement, que ce soit sur un tambour de confection de pneumatiques ou sur tout autre moyen de réunion des dites deux parties, d'avoir entre les deux inserts (11) et (12) un certain nombre de points de contact, quelles que soient les erreurs normalement admises de positionnement des deux parties de bande de roulement l'une par rapport à l'autre, dites erreurs de centrage (décalage des axes moyens des deux inserts (11) et (12) perceptible sur les figures 1A et 1B), le nombre de points de contact sur la circonférence de la partie intérieure étant dépendant de la longueur d'onde λ de l'ondulation choisie.

La connexion électrique entre l'armature de sommet (2) et l'armature de carcasse (1) se réalise, dans le cas décrit, par le même système, c'est-à-dire, soit par l'utilisation d'un insert circonférentiel circulaire (non montré), continu ou discontinu, l'axe moyen de la trace circulaire étant approximativement centré sur l'axe moyen de la trace ondulée de l'insert (12), que la connexion électrique soit réalisée par le passage dans la partie (61) de faible épaisseur qui sépare l'armature de carcasse (1) de l'armature de sommet (2), ou le passage dans un des profilés (62) qui sépare un des bords d'armature de sommet (2) de l'armature de carcasse (1).

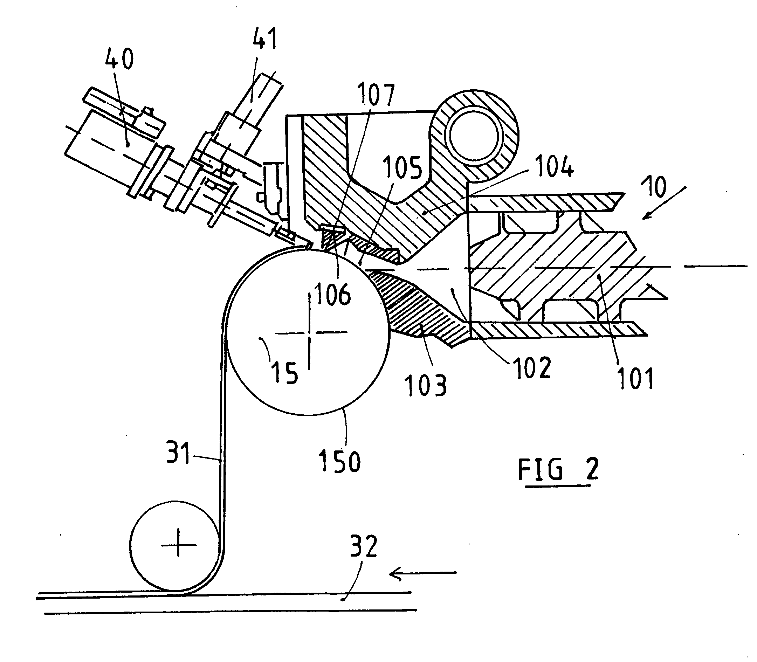

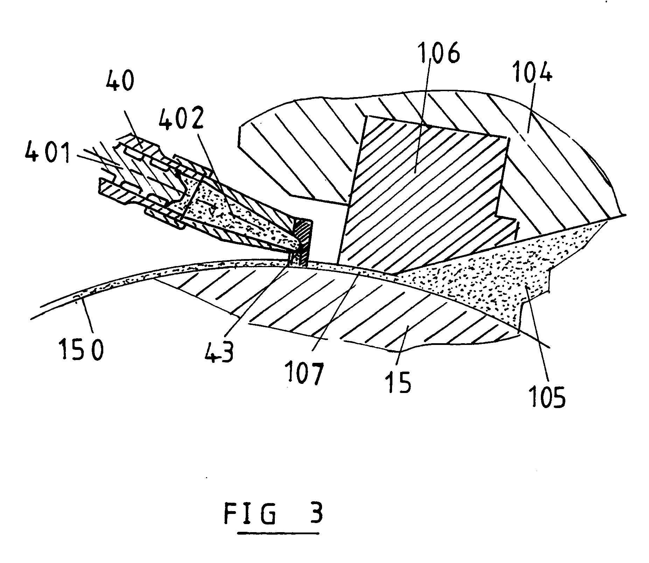

Sur la figure 2 est représentée une première extrudeuse (10) refoulant à l'aide de la vis d'extrusion (101) le mélange de caoutchouc non vulcanisé, destiné à la fabrication de la partie intérieure (31) de bande de roulement, dans une tête d'extrusion (102), délimitée par des voûtes (103) et (104), et comprenant un canal d'écoulement (105) amenant d'une part le mélange sur un rouleau rotatif (15), associé à l'extrudeuse (10), et d'autre part le dit mélange vers un orifice d'extrusion (107) délimité par la surface cylindrique (150) du rouleau (15) et la paroi fixe d'une lame (106), orifice d'extrusion permettant de conférer au mélange extrudé le profil souhaité. A ces premiers extrudeuse et rouleau est associée une micro-extrudeuse (40), montée sur un support (41) permettant de pouvoir, manuellement ou selon un programme préétabli, assurer le déplacement de ladite micro-extrudeuse (40) dans les trois directions principales. Cette dernière (figure 3), armée d'une vis (401) et d'une tête d'extrusion (402), comporte à son extrémité une buse (43) fixée au nez de la micro-extrudeuse (40), et dont l'extrémité est plaquée contre la surface cylindrique (150) du rouleau (15) en aval de l'orifice d'extrusion (107). Ainsi, ladite buse (43) permet d'extruder, selon des profil et trace désirés, l'insert circonférentiel (12) dans le profilé de mélange non vulcanisé et chaud sortant de l'orifice 107) de l'extrudeuse (10).

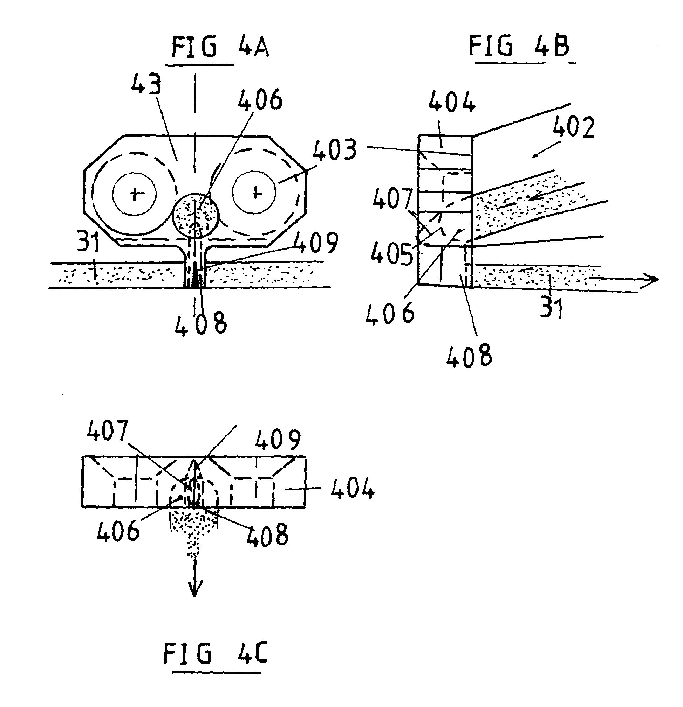

Comme montrée sur les figures 4A à 4C, ladite buse (43) comporte une surface d'appui (403) muni d'orifices permettant l'attache de ladite buse (43) au nez de la tête d'extrusion (402) de la micro-extrudeuse (40). Cette surface d'appui est prolongée axialement par une tête de buse (404) comprenant principalement une chambre d'alimentation (405) à deux compartiments : un premier compartiment (406) creux de forme sphérique prolongé par une deuxième compartiment (407) de forme ovoïde. Ladite chambre (405) permet la desserte d'une fente (408) de hauteur et largeur appropriées au produit (31) traité, qui est préalablement fendu par une arête coupante (409), partie intégrante de la tête de buse (404). La flèche, indiquée sur les figures 4B et 4C, montre la direction du flux de mélange caoutchouteux traité (31).

## Revendications

1. - Pneumatique comportant au moins deux couches radialement adjacentes (32) et (31) de mélanges caoutchouteux non conducteurs de l'électricité, les dites deux couches (31, 32) ayant une paroi commune de contact (310), **caractérisé en ce que** chaque couche (31, 32) contient un insert circonférentiel ou zébrure (11, 12) de mélange conducteur, présentant, sur la paroi de contact (310) une surface circonférentielle, la première de ces couches (31, 32) ayant sur ladite paroi une surface circonférentielle à tracé circulaire de largeur e, la deuxième couche (31, 32) ayant sur ladite paroi une surface circonférentielle avec un tracé de largeur e' allant en le croisant et présentant des crêtes de part et d'autre du tracé circulaire de la première couche, de sorte qu'il y ait circonférentiellement entre les deux tracés plusieurs points de contact assurant la connexion électrique entre les deux éléments conducteurs, le tracé de la deuxième couche ayant une amplitude crête à crête maximale au moins égale à 10 mm.

2. - Pneumatique selon la revendication 2, **caractérisé en ce que** le tracé de la surface circonférentielle de la deuxième couche est un tracé périodique, défini par une amplitude a et une longueur d'onde λ, les axes moyens des deux tracés sur la paroi de contact étant parallèles au et distants du plan équatorial du pneumatique de quantités dont la différence est au plus égale à la demi-amplitude a/2 dudit tracé périodique.

3. - Pneumatique selon la revendication 1, **caractérisé en ce que** chaque couche (31, 32) contient un insert (11, 12) présentant, vu en section transversale, une aire rectangulaire sur toute l'épaisseur de la couche.

4. - Pneumatique selon la revendication 2, **caractérisé en ce que** les deux couches non conductrices seront les parties intérieure et extérieure (31, 32) de la bande de roulement (3), la connexion électrique étant assurée entre le sol et l'armature de sommet (2), composée de câbles métalliques calandrés dans un mélange de caoutchouc rendue conducteur.

5. - Pneumatique selon la revendication 2, **caractérisé en ce que** les couches non conductrices sont d'une part les parties intérieure et extérieure (31, 32) de bande de roulement (3), et d'autre part un profilé de forme triangulaire (62) séparant l'armature de carcasse (1) d'un bords d'armature de sommet (2), la connexion étant assurée entre les trois couches.

6. - Pneumatique selon la revendication 4, **caractérisé en ce que** la partie munie d'un insert (11) à tracé circonférentiel circulaire est la partie supérieure (32) de la bande de roulement (3), l'autre partie, munie d'un insert à tracé circonférentiel périodique, étant la partie inférieure (31) de bande de roulement (3).

7. - Procédé pour la fabrication d'une couche de caoutchouc non vulcanisé pourvue d'un insert présentant un tracé circonférentiel périodique**caractérisé en ce que** :
* l'on extrude, sur un appareil d'extrusion (10) comprenant une tête d'extrusion (102) pourvue d'un canal d'écoulement (105) débouchant sur un orifice d'extrusion (107), ladite couche,
* l'on coupe le profilé, posé sur un moyen de cheminement disposé en aval de l'orifice d'extrusion, à l'aide d'un moyen coupant,
* l'on extrude et insère, entre les deux parois de la coupure et au moyen de la buse (43) d'une micro-extrudeuse amovible (40), l'insert (12) de mélange caoutchouteux conducteur à l'état non vulcanisé, ladite buse (43) étant appliquée contre la paroi dudit moyen de cheminement et animée d'un mouvement périodique, parallèle à ladite paroi et d'amplitude a au moins égal à 10 mm.

8. - Procédé pour la fabrication d'une couche de bande de roulement (3) entrant dans la composition d'un pneumatique, et comportant un insert (12) conducteur électrique, **caractérisé en ce que** l'on utilise le procédé selon la revendication 7.

9. - Procédé selon la revendication 8, **caractérisé en ce qu'**il utilise une extrudeuse (10) dénommée extrudeuse à nez à rouleau, le moyen de cheminement étant ledit rouleau (15).

10. - Appareillage pour la mise en oeuvre du procédé d'obtention d'une couche pourvue d'un insert (12) à tracé périodique selon la revendication 9, comprenant une extrudeuse (10) avec nez à rouleau (15) pour extruder la couche non vulcanisée, **caractérisé en ce qu'**il comprend en outre une micro-extrudeuse (40), montée sur un support (41) permettant de pouvoir assurer le déplacement de ladite micro-extrudeuse (40) dans les trois directions principales, ladite micro-extrudeuse comprenant une tête d'extrusion (402), munie à son extrémité d'une buse (43), destinée à extruder, selon les profil et tracé désirés, l'insert circonférentiel (12) dans la couche de mélange non vulcanisé sortant de l'extrudeuse principale (10).

11. - Appareillage selon la revendication 10, **caractérisé en ce que** la buse d'extrusion de la micro-extrudeuse (40) comprend une surface d'appui (403) permettant la fixation sur le nez de la micro-extrudeuse (40), ladite surface étant prolongée axialement par une tête de buse (404) comprenant principalement une chambre d'alimentation (405) creuse permettant la desserte d'une fente (408) de hauteur et largeur appropriées au produit (31) traité, produit qui est préalablement fendu par une arête coupante (409), partie intégrante de la tête de buse (404).

## Claims

1. Tyre comprising at least two layers (31), (32) of rubber mixes which do not conduct electricity, the said two layers (31) and (32) having a common contact surface (310),
**characterized in that**
each layer (31, 32) contains a circumferential insert or striation (11, 12) of conductive mix which, on the contact surface (310) has a circumferential footprint, the first of these layers (31, 32) having on the said surface a circumferential footprint of circular path and of width e, the second layer (31,32) having on the said surface a circumferential footprint with a path of width e' which crosses and has crests on either side of the circular path of the first layer, such that circumferentially between the two paths there are numerous points of contact which ensure electrical connection between the two conductive elements, and the path of the second layer has a maximum crest-to-crest amplitude equal to 10 mm.

2. Tyre according to Claim 1,
**characterized in that**
the path of the circumferential footprint of the second layer is a periodic path, defined by an amplitude a and a wavelength ?, the median axes of the two paths on the contact surface being parallel to and separated from the equatorial plane of the tyre by distances whose difference is at most equal to half the amplitude a/2 of the said periodic path.

3. Tyre according to Claim 1,
**characterized in that**
each layer (31, 32) contains an insert (11, 12) which, when viewed in cross-section, has a rectangular area throughout the thickness of the layer.

4. Tyre according to Claim 2,
**characterized in that**
the two non-conductive layers are the inner and outer portions (31, 32) of the tread (3), and electrical connection is ensured between the ground and the crown reinforcement (2) consisting of metallic cables covered with a rubber mix which has been made conductive.

5. Tyre according to Claim 2,
**characterized in that**
the non-conductive layers are on the one hand the inner and outer portions (31, 32) of the tread (3), and on the other hand a section of triangular shape (62) separating the carcass reinforcement (1) from an edge of the crown reinforcement (2), connection being ensured between the three layers.

6. Tyre according to Claim 4,
**characterized in that**
the portion provided with an insert (11) having a circular circumferential path is the upper portion (32) of the tread (3), while the other portion, the one provided with an insert having a periodic circumferential path, is the lower portion (31) of the tread (3).

7. Process for the production of an unvulcanized rubber layer provided with and insert having a circumferential and periodic path,
**characterized in that**
* the said layer is extruded on an extruder (10) comprising an extrusion head (102) provided with a flow channel (105) which opens into an extrusion orifice (107),
* the section is positioned on a means of conveyance downstream from the extrusion orifice and cut by a means of cutting,
* the insert (12) of conductive rubber mix is extruded and inserted in the unvulcanized condition between the two walls of the cut by means of the nozzle (43) of a movable micro-extruder (40), the said nozzle (43) being directed against the wall of the said means of conveyance and undergoing a periodic movement parallel to the said wall, the amplitude of the movement being at least equal to 10 mm.

8. Process for the fabrication of a layer of a tyre tread (3) to be included in the make-up of the tyre, and which comprises an electrically conductive insert (12),
**characterized in that**
the process according to Claim 7 is used.

9. Process according to Claim 8,
**characterized in that**
it uses an extruder (10) known as a roller die extruder, the means of conveyance being the said roller (15).

10. Equipment for carrying out the process of obtaining a layer provided with an insert (12) with a periodic path according to Claim 9, comprising an extruder (10) with a roller die (15) for the extrusion of the layer in the unvulcanized condition,
**characterized in that**
it also comprises a micro-extruder (40) fitted on a support (41) which allows the said micro-extruder (40) to be moved in the three main directions, the said micro-extruder comprising an extrusion head (402) provided at its end with a nozzle (43) designed to extrude the circumferential insert (12), with the desired profile and path, into the unvulcanized mix layer emerging from the main extruder (10).

11. Equipment according to Claim 10,
**characterized in that**
the extrusion nozzle of the micro-extruder (40) comprises a contact surface (403) for fixing to the outlet of the micro-extruder (40), the said surface being extended axially by a nozzle head (404) mainly comprising a feed hollow feed chamber (405) with room for a slot (408) of height and width appropriate for the product (31) treated, the said product being previously split by a cutting edge (409) which is an integral portion of the nozzle head (404).

## Patentansprüche

1. Reifen, der mindestens zwei radial benachbarte Schichten (32) und (31) aus elektrisch nicht leitenden Kautschukmischungen aufweist, wobei die zwei Schichten (31, 32) eine gemeinsame Kontaktwand (310) aufweisen, **dadurch gekennzeichnet, dass** jede Schicht (31, 32) einen Umfangseinsatz oder Streifen (11, 12) aus leitender Mischung aufweist, der auf der Kontaktwand (310) eine Umfangsfläche aufweist, wobei die erste dieser Schichten (31, 32) auf der Wand eine Umfangsfläche mit kreisförmigem Verlauf mit der Breite e aufweist, die zweite Schicht (31, 32) auf der Wand eine Umfangsfläche mit einem Verlauf mit der Breite e' aufweist, der ihn überkreuzend verläuft und auf beiden Seiten des kreisförmigen Verlaufs der ersten Schicht Kämme aufweist, derart, dass im Umfang zwischen den zwei Verläufen mehrere Kontaktpunkte vorhanden sind, die die elektrische Verbindung zwischen den zwei leitenden Bestandteilen gewährleisten, wobei der Verlauf der zweiten Schicht von Kamm zu Kamm eine maximale Amplitude von mindestens gleich 10 mm aufweist.

2. Reifen nach Anspruch 2, **dadurch gekennzeichnet, dass** der Verlauf der Umfangsfläche der zweiten Schicht ein periodischer Verlauf ist, der durch eine Amplitude a und eine Wellenlänge λ bestimmt ist, wobei die Mittelachsen der zwei Verläufe auf der Kontaktwand parallel zur Äquatorialebene des Reifens und in Größen davon entfernt sind, deren Differenz höchstens gleich der Halbamplitude a/2 des periodischen Verlaufs ist.

3. Reifen nach Anspruch 1, **dadurch gekennzeichnet, dass** jede Schicht (31, 32) einen Einsatz (11, 12) aufweist, der, im Querschnitt gesehen, auf der gesamten Dicke der Schicht eine rechteckige Fläche aufweist.

4. Reifen nach Anspruch 2, **dadurch gekennzeichnet, dass** die zwei nicht leitenden Schichten der innere und der äußere Abschnitt (31, 32) der Lauffläche (3) sein werden, wobei die elektrische Verbindung zwischen dem Boden und der obersten Armierung (2) gewährleistet ist, die aus in einer leitend gemachten Kautschukmischung kalandrierten Stahlseilen besteht.

5. Reifen nach Anspruch 2, **dadurch gekennzeichnet, dass** die nicht leitenden Schichten einerseits die inneren und äußeren Abschnitte (31, 32) der Lauffläche (3) und andererseits ein Profil mit dreieckiger Form (62) sind, das die Karkassenarmierung (1) von einem Rand der obersten Armierung (2) trennt, wobei die Verbindung zwischen den drei Schichten gewährleistet ist.

6. Reifen nach Anspruch 4, **dadurch gekennzeichnet, dass** der mit einem Einsatz (11) mit kreisförmigem Umfangsverlauf versehene Abschnitt der obere Abschnitt (32) der Lauffläche (3) ist, wobei der andere Abschnitt, der mit einem periodischen Umfangsverlauf versehen ist, der untere Abschnitt (31) der Lauffläche (3) ist.

7. Verfahren zur Herstellung einer nicht vulkanisierten Kautschukschicht, die mit einem Einsatz versehen ist, der einen periodischen Umfangsverlauf aufweist, **dadurch gekennzeichnet, dass**:
- die Schicht auf einer Vorrichtung zum Extrudieren (10) extrudiert wird, die einen Extrusionskopf (102) aufweist, der mit einem Düsenkanal (105) versehen ist, der in eine Extrusionsöffnung (107) mündet;
- das auf einem der Extrusionsöffnung nachgelagert angeordneten Führungsmittel aufgelegte Profil mit Hilfe eines Schneidemittels geschnitten wird;
- der Einsatz (12) aus leitender Kautschukmischung mit Hilfe der Düse (43) eines abnehmbaren Mikroextruders (40) im nicht vulkanisierten Zustand zwischen den zwei Wänden des Schnitts extrudiert und eingesetzt wird, wobei die Düse (43) auf die Wand des Führungsmittels gedrückt wird und mit einer periodischen Bewegung parallel zur Wand und mit einer Amplitude von mindestens gleich 10 mm bewegt wird.

8. Verfahren zur Herstellung einer Laufflächenschicht (3), die in die Struktur eines Reifens aufgenommen wird und einen elektrisch leitenden Einsatz (12) aufweist, **dadurch gekennzeichnet, dass** das Verfahren nach Anspruch 7 verwendet wird.

9. Verfahren nach Anspruch 8, **dadurch gekennzeichnet, dass** ein Extruder (10) verwendet wird, der Extruder mit Mundstück und Zylinder genannt wird, wobei der Zylinder (15) das Führungsmittel ist.

10. Vorrichtung zur Durchführung des Verfahrens zum Erhalten einer mit einem Einsatz (12) mit periodischem Verlauf versehenen Schicht nach Anspruch 9, das einen Extruder (10) mit Mundstück und Zylinder (15) aufweist, um die nicht vulkanisierte Schicht zu extrudieren, **dadurch gekennzeichnet, dass** sie des Weiteren einen Mikroextruder (40) aufweist, der auf einem Träger (41) befestigt ist, der das Verschieben des Mikroextruders (40) in die drei Hauptrichtungen ermöglicht, wobei der Mikroextruder einen Extrusionskopf (402) aufweist, der an seinem Ende mit einer Düse (43) versehen ist, die dazu bestimmt ist, den Umfangseinsatz (12) gemäß dem gewünschten Profil und Verlauf in die Schicht aus nicht vulkanisierter Mischung, die aus dem Hauptextruder (10) austritt, zu extrudieren.

11. Vorrichtung nach Anspruch 10, **dadurch gekennzeichnet, dass** die Extrusionsdüse des Mikroextruders (40) eine Auflagefläche (403) aufweist, die die Befestigung auf dem Mundstück des Mikroextruders (40) ermöglicht, wobei die Fläche axial durch einen Düsenkopf (404) verlängert ist, der hauptsächlich eine hohle Beschickungskammer (405) aufweist, die das Versorgen eines Schlitzes (408) von für das verarbeitete Material (31) geeigneter Höhe und Breite ermöglicht, wobei das Material im Voraus durch eine schneidende Kante (409) gespalten wird, die ein integrierender Bestandteil des Düsenkopfs (404) ist.
